(19) Europäisches Patentamt
European Patent Office
Office européen des brevets

(11) Veröffentlichungsnummer: **0 201 726**
**B1**

# (12) EUROPÄISCHE PATENTSCHRIFT

(45) Veröffentlichungstag der Patentschrift: **28.12.88**

(51) Int. Cl.⁴: **C 07 F 7/22**, A 01 N 55/04

(21) Anmeldenummer: **86104887.4**

(22) Anmeldetag: **10.04.86**

## (54) Biozide Tributylzinnverbindungen.

(30) Priorität: **09.05.85 DE 3516695**

(43) Veröffentlichungstag der Anmeldung: **20.11.86 Patentblatt 86/47**

(45) Bekanntmachung des Hinweises auf die Patenterteilung: **28.12.88 Patentblatt 88/52**

(84) Benannte Vertragsstaaten: **BE CH DE FR GB LI NL SE**

(56) Entgegenhaltungen:
**FR-A-1 499 737**
**US-A-3 892 862**

(73) Patentinhaber: **SCHERING AKTIENGESELLSCHAFT Berlin und Bergkamen, Waldstrasse 14 Postfach 15 40, D-4709 Bergkamen (DE)**

(72) Erfinder: **Plum, Hans, Dr. Dipl.-Chem., Sulkshege 12, D-4700 Hamm (DE)**
Erfinder: **Landsiedel, Horst, Augustin-Wibbelt-Strasse 18, D-4750 Unna (DE)**

**EP 0 201 726 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Tributylzinnverbindungen, z. B. Tributylzinnoxid, aber auch Tributylzinnester von Carbonsäuren besitzen eine hohe biozide Wirkung gegen Pilze und Bakterien. Sie werden daher in grossem Umfang als Wirkstoffe zur bioziden Ausrüstung von vielen Materialien und als Konservierungs- oder Desinfektionsmittel verwendet. Die biozide Wirkung der Tributylzinnverbindungen beschränkt sich nicht nur auf Mikroorganismen, sie umfasst auch bestimmte Meeresorganismen. Diese Verbindungen verhindern daher in Antifoulingfarben einen schädlichen Bewuchs des Unterwasserschiffes mit Seepocken, Muscheln oder Algen.

Ferner kennt man aus der FR-A-1 499 737 das herbizide 1-Adamantancarboxylat des Tributylzinns.

Ein bedeutendes Anwendungsgebiet für Triorganozinnverbindungen ist der Schutz von frisch geschlagenem oder verbautem Holz vor Befall durch holzsschädigende Pilze. Aufgrund ihrer starken Wirksamkeit und ihres breiten Wirkungsspektrums werden Tributylzinnverbindungen in grossem Umfang als Fungizide in Holzschutzmitteln eingesetzt.

Bei diesen Organozinnverbindungen handelt es sich im wesentlichen um Lösungen von Tributylzinnoxid bzw. Tributylzinnestern organischer Säuren wie Tributylzinnbenzoat, -linoleat oder -naphthenat in organischen Lösungsmitteln. Doch lassen sich mit Hilfe von Emulgatoren auch wässrige Tributylzinnzubereitungen herstellen. Die Tributylzinnverbindungen sind bereits in sehr niedrigen Konzentrationen wirksam.

Massgebend für die Wirksamkeit der verschiedenen Tributylzinnverbindungen ist in der Regel der Zinngehalt. Da dieser bei Tributylzinnestern langkettiger Carbonsäuren niedriger liegt als bei Tributylzinnoxid, müssen bei Verwendung derartiger Ester zur Erzielung der gleichen Wirkung entsprechend höhere Mengen aufgewendet werden.

Eine spezifische, von der Natur der verwendeten Carbonsäure abhängige biozide Wirkung ist daher bei Tributylzinnverbindungen nicht bekannt geworden.

Die biozide Wirkung von Holzschutzmitteln lässt sich durch die sogenannten Grenzwerte ausdrükken, wobei der untere Wert die Konzentration darstellt, bei der gerade noch ein Pilzangriff erfolgt und der obere die Konzentration ist, bei der kein Angriff mehr erfolgt.

So liegen die Grenzwerte nach DIN 52 176 gegen einen typischen holzzerstörenden Pilz (Coniophora puteana) für

Tributylzinnoxid bei 0,34–0,70 kg/$m^3$ Holz und für

Tributylzinnlinoleat entsprechend höher bei 0,92–1,3 kg/$m^3$.

Von grosser Bedeutung für die Verwendbarkeit von Bioziden als Holzschutzmittel ist ihre Dauerbeständigkeit. Die Mittel sollen dem damit behandelten Holz einen möglichst lang anhaltenden Schutz gegen mikrobiellen Angriff verleihen. Grundsätzlich handelt es sich bei Tributylzinnverbindungen um recht beständige Stoffe, mit denen man Holzschutzmittel mit guter Dauerwirkung herstellen kann. Unter bestimmten Bedingungen, wie höhere Temperatur bzw. Einwirkung spezieller Holzinhaltsstoffe, können sie aber unter Abspaltung von Butylgruppen zu biologisch weniger wirksamen zinnorganischen Verbindungen abgebaut werden.

Ein wesentlicher Faktor für die Beständigkeit von Holzschutzmitteln ist die thermische Beständigkeit der Wirkstoffe. Biozid ausgerüstetes Holz, das der Witterung ausgesetzt ist, kann bei Sonnenbestrahlung über einen längeren Zeitraum auf über 70 °C aufgeheizt werden.

Es wurde nun gefunden, dass sich Umsetzungsprodukte von Tributylzinnoxid (TBTO) oder Tributylzinnhalogeniden mit Tricyclodecan-Alkoholen durch eine sehr hohe thermische Beständigkeit in damit behandeltem Holz auszeichnen, die noch erheblich über der der bisher im Holzschutz viel verwendeten Verbindungen Tributylzinnoxid (TBTO) oder Tributylzinnaphthenat bzw. -linoleat (TBTN, TBTL) liegt.

Gegenstand der Erfindung sind demnach Tributylzinnderivate von Tricyclodecan-Alkoholen der allgemeinen Formeln

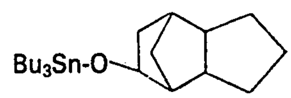

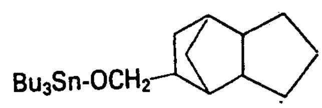

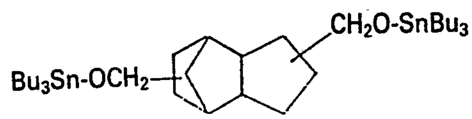

(Bu = n-Butyl)

wobei die Verbindungen

8-Tri-n-butylstannyl-oxy-tricyclo-[5,2,1,$0^{2,6}$]decan,

8-Tri-n-butylstannyl-oxymethyl-tricyclo-[5,2,1,$0^{2,6}$]decan

3(4),8(9)-Bis(tri-n-butylstannyl-oxymethyl)-tricyclo[5,2,1,$0^{2,6}$]decan bevorzugt sind.

Die Erfindung betrifft ferner ein Verfahren zu ihrer Herstellung, welches dadurch gekennzeichnet ist, dass man die entsprechenden TCD-Alkohole mit Bis-(tri-n-butylzinn)-oxid oder Tri-n-butylzinnhalogeniden umsetzt.

Die Erfindung betrifft weiterhin ein biozides Mittel, welches als aktive Komponente eines oder mehrere der obengenannten Tributylzinnderivate enthält und vorzugsweise im Holzschutz eingesetzt wird.

Die einzusetzenden Tricyclodecan-Alkohole sind bekannte, im Handel unter der Bezeichnung TCD-Alkohole (Hoechst AG) erhältliche Produkte, die üblicherweise durch entsprechende Umsetzungen des Dicyclopentadiens erhalten werden.

Als Beispiele für geeignete Ausgangsstoffe für die erfindungsgemässen Tributylzinnderivate seien genannt:

8-Hydroxy-tricyclo[5,2,1,$0^{2,6}$]decan

8-Hydroxymethyl-tricyclo[5,2,1,$0^{2,6}$]decan oder auch

3(4),8(9)-Bis(hydroxymethyl)-tricyclo-[5,2,1,$0^{2,6}$]decan.

Durch Umsetzung mit Tributylzinnoxid oder Tributylzinnhalogenid lassen sich daraus die erfindungsgemäss beanspruchten Verbindungen, wie z.B.

8-Tri-n-butylstannyl-oxy-tricyclo[5,2,1,$0^{2,6}$]decan (=TBT-TCD 1),

8-Tri-n-butylstannyl-oxymethyl-tricyclo-[5,2,1,$0^{2,6}$]decan (=TBT-TCD 2) und

3(4),8(9)-Bis(tri-n-butylstannyl-oxymethyl)-tricyclo[5,2,1,$0^{2,6}$]decan (=TBT-TCD 3)

herstellen.

Aufgrund ihrer ausgezeichneten bioziden Eigenschaften und ihrer hohen Beständigkeit verleihen die Verbindungen der TBT-TCD-Reihe damit ausgerüsteten Materialien eine hohe biozide Dauerwirkung. Sie können daher als Wirkstoff in Holz- und Textilschutzmitteln, Desinfektionsmitteln oder auch zur Konservierung von Farben, Leimen, Dichtungsmitteln oder Bohrölen sowie als Antifoulingwirkstoffe eingesetzt werden.

Die erfindungsgemässen Verbindungen werden in Form von Zubereitungen wie Lösungen, Emulsionen, Dispersionen mit und ohne Bindemittel oder mit festen Trägerstoffen bzw. Verdünnungsmitteln und gegebenenfalls mit Zusatz von Netz-, Emulgier- und Dispergiermitteln angewandt.

Das Ein- bzw. Aufbringen der erfindungsgemässen Verbindungen in Form von Lösungen, Emulsionen bzw. Dispersionen geschieht z.B. durch Streichen, Spritzen, Sprühen oder Tränken.

Die Wirkstoffkonzentrationen liegen im allgemeinen im Bereich von 0,05 bis 50 Gew.-% und werden durch die Anforderungen der Anwendung und der Aufnahmefähigkeit der Substrate bestimmt.

Für den Holzschutz werden bevorzugt Lösungen der erfindungsgemässen Verbindungen in Benzinfraktionen, gegebenenfalls mit Zusatz von Penetrationsfördermitteln, Bindemitteln oder anderen Lösungsmitteln, in Konzentrationen von 0,05 bis 5 Gew.-% verwendet und in Mengen von 50 bis 400 g Wirkstofflösung je $m^2$ Holzoberfläche durch Streichen, Spritzen und dergleichen aufgebracht.

Ein sehr wirkungsvoller Holzschutz wird erreicht, wenn die erfindungsgemässen Verbindungen, gelöst in geeigneten Substanzen, durch spezielle technische Verfahren wie z.B. Doppelvakuumverfahren, Vakuumverfahren oder Vakuumdruckverfahren in das Holz eingebracht werden, so dass eine Beladung von 0,1 bis 3,0, vorzugsweise 0,5 bis 1,5 kg Wirkstoff je $m^3$ Holz erreicht wird.

Mit den erfindungsgemässen Verbindungen lassen sich auch wasserverdünnbare Formulierungen erstellen, die ebenfalls für den Holzschutz eingesetzt werden können, z.B. durch Streichen, Tauchen usw. mit Emulsionen, die 0,5 bis 3 Gew.-% Wirkstoff enthalten. Zum Schutz von Holzwerkstoffen können die erfindungsgemässen Verbindungen in Form von hochkonzentrierten Lösungen bzw. Formulierungen mit Emulgatoren dem Bindemittel oder Klebstoff in Mengen von 0,1 bis 2 Gew.-%, bezogen auf Wirkstoff, zugesetzt werden.

Zum Schutz von Material, z.B. Baumwollgewebe, gegen unerwünschte Mikroorganismen, lassen sich die Verbindungen aus Lösungen, z.B. in Äthanol, Xylol, Ketonen mit Wirkstoffkonzentrationen von 0,05 bis 3 Gew.-% mittels Sprühen oder Tränken aufbringen, wobei eventuell Hydrophobierungsmittel zugesetzt werden können.

Zur Verbreitung des Wirkungsspektrums, zur Erzielung besonderer Wirkung gegen spezielle Mikroorganismen oder zur insektiziden Ausrüstung lassen sich die erfindungsgemässen Verbindungen mit anderen Wirkstoffen kombinieren, z.B. sind hierzu geeignet:

3-Jod-2-propynol-butyl-carbamat
Kupfernaphthenat
Kupfer-8-oxychinolin
N-Cyclohexyl-N-methoxy-2,5-dimethyl-furan-3-carbonsäureamid
N,N'-Dimethyl-N'-phenyl-N'-fluordichlormethyl-thiosulfonyldiamid
Benzimidazol-2-carbaminsäure-methylester
N-Trichlormethylthio-Phthalimid
γ-Hexachlorcyclohexan
Permethrin

Herstellungsbeispiele

Beispiel 1

1 Mol 8-Hydroxy-tricyclo[5,2,1,$0^{2,6}$]decan mit ½ Mol Tributylzinnoxid werden mit ca. 1200 ml Xylol unter Rühren zum Rückfluss erhitzt. Innerhalb von ca. 3 h wird das entstehende Reaktionswasser quantitativ azeotrop abgeschieden. Danach wird das Lösungsmittel abdestilliert.

Man erhält als Rückstand ein leicht gelbliches, flüssiges Produkt mit einem Zinngehalt von 26,5%, das sich in organischen Lösungsmitteln wie Alkoholen, Ketonen, chlorierten Kohlenwasserstoffen sowie Benzinen leicht löst. In Wasser ist es dagegen schwer löslich.

Beispiel 2

1 Mol 8-Hydroxymethyl-tricyclo[5,2,1,$0^{2,6}$]decan und ½ Mol Tributylzinnoxid werden mit ca. 1200 ml Xylol unter Rühren zum Rückfluss erhitzt. Innerhalb von ca. 3 h wird das entstehende Reaktionswasser quantitativ azeotrop abgeschieden. Danach wird das Lösungsmittel abdestilliert.

Man erhält als Rückstand eine gelbliche Flüssigkeit mit einem Zinngehalt von 25,4%, die sich in organischen Lösungsmitteln wie z.B. Alkoholen, Ketonen, chlorierten Kohlenwasserstoffen sowie Benzinen leicht löst. In Wasser ist sie dagegen schwer löslich.

Beispiel 3

1 Mol 3(4),8(9)-Bis(hydroxymethyl)-tricyclo-[5,2,1,$0^{2,6}$]decan und 1 Mol Tributylzinnoxid werden mit ca. 1500 ml Xylol unter Rühren zum Rückfluss erhitzt. Innerhalb von ca. 3 h wird das entstehende Reaktionswasser quantitativ azeotrop abgeschieden. Danach wird das Lösungsmittel abdestilliert.

Man erhält als Rückstand ein schwach gelb gefärbtes, flüssiges Produkt mit einem Zinngehalt von 30,4%, das sich in organischen Lösungsmitteln wie Alkoholen, Ketonen, chlorierten Kohlenwasserstoffen sowie in Benzinen leicht löst. In Wasser ist es dagegen nur wenig löslich.

Beispiel 4

1 Mol 3(4),8(9)-Bis(hydroxymethyl)-tricyclo-[5,2,1,$0^{2,6}$]decan wurde mit 1 Mol Tri-n-butylzinnchlorid unter Rühren auf ca. 50 °C erwärmt. Es wurde dann portionsweise 1 Mol Natriumhydrid in fester Form zugegeben, die Temperatur auf ca. 100 °C erhöht und ca. 1 h bei dieser Temperatur gerührt. Danach wurde das ausgefallene Natriumchlorid über eine Nutsche abgesaugt und das Filtrat im Scheidetrichter viermal mit je ca. 500 ml Wasser gewaschen. Nach dem Trocknen über wasserfreiem Natriumsulfat wurde ein flüssiges Produkt mit den gleichen Eigenschaften wie das Reaktionsprodukt aus Beispiel 3 erhalten.

Rezeptur-Beispiele

Beispiel 1

Eine farblose, wenig Bindemittel enthaltende Holzschutzgrundierung, bestehend aus

2,0 Gew.-Tl. Reaktionsprodukt aus Beispiel 3
0,2 Gew.-Tl. Permethrin 25:75
6 Gew.-Tl. Diäthylenglykolmonobutyläther
8 Gew.-Tl. langöliges Alkydharz (ca. 33% Phthalharz, ca. 67% Triglyceride pflanzlicher Fettsäuren)
83,8 Gew.-Tl. White spirit

zeigt ein gutes Eindringvermögen und lässt sich sehr gut als Holzschutzgrundierung für Bauholz verwenden.

Beispiel 2

Eine farbige Holzschutz-Lasur, bestehend aus

2,5 Gew.-Tl. Reaktionsprodukt aus Beispiel 3
40 Gew.-Tl. langöliges Alkydharz (siehe Beispiel 1)
0,5 Gew.-Tl. Sikkative (Co-, Mn-, Pb-Salze)
0,5 Gew.-Tl. Antiabsetzmittel
9,2 Gew.-Tl. Eisenoxidrotpaste
0,8 Gew.-Tl. Eisenoxidschwarzpaste
6 Gew.-Tl. Diäthylenglykolmonobutyläther
39,3 Gew.-Tl. White spirit

ist geeignet zum Anstrich von masshaltigen Holzbauteilen wie Fensterrahmen, Türen usw.

Beispiel 3

Eine wasserverdünnbare Wirkstoffkombination, bestehend aus

15 Gew.-Tl. Reaktionsprodukt aus Beispiel 1
5 Gew.-Tl. N,N'-Dimethyl-N-phenyl-N'-fluordichlormethyl-thiosulfonyl-diamid
80 Gew.-Tl. nichtionogener Emulgator

lässt sich in weiten Bereichen (1:5 bis 1:50) mit Wasser verdünnen und ergibt stabile Emulsionen zum Streichen, Spritzen oder Tauchen von z. B. frisch geschlagenem Holz. Die unverdünnte Formulierung wird in Konzentrationen von 0,2 bis 3 Gew.-% zur bioziden Ausrüstung von wässrigen Anstrichsystemen, z. B. Dispersionen auf Acrylat-Basis, eingesetzt.

Beispiel 4

Eine Wirkstofflösung zur bioziden Ausrüstung von Textilen, z. B. Baumwollsegeltuch, bestehend aus

3,0 Gew.-Tl. Reaktionsprodukt aus Beispiel 2
3,6 Gew.-Tl. mikronisiertes Polyethylenwachs
93,4 Gew.-Tl. geruchsarmes, synthetisches Isoparaffin

lässt sich entweder durch Sprühen der Lösung oder durch Tauchen der zu behandelnden Materialien aufbringen.

Beispiel 5

Eine Antifoulingfarbe, bestehend aus

13 Gew.-Tl. Reaktionsprodukt aus Beispiel 1
15 Gew.-Tl. Chlorkautschuk
7 Gew.-Tl. Chlorparaffin (54% Cl)
40 Gew.-Tl. Pigment Rutil $TiO_2$
25 Gew.-Tl. Xylol

Bei einem stationären Bewuchstest blieb dieser Anstrich bisher zwei Jahre ohne Bewuchs.

Untersuchung der Beständigkeit in Holz

Die Dauerbeständigkeit von bioziden Holzschutzmitteln (Tabelle 1) lässt sich in Lagerversuchen bestimmen. Hierbei werden Holzklötzchen aus Kiefernsplintholz in den Grössen 5,0×2,5×1,5 cm mit Lösungen der zu prüfenden Biozide getränkt und nach dem Verdunsten des Lösungsmittels 4 Wochen bei 20 °C und anschliessend 2 Wochen bei 80 °C gelagert.

Tabelle 1
Abbau der Tributylzinnverbindungen in Holz

| | | | Extrakt | |
|---|---|---|---|---|
| Tränklösung | aufgenommene Menge Sn | TBT-Gehalt der Ausgangsstoffe | Gesamtzinngehalt | TBT-Gehalt der Extrakte |
| TBTO | 28,0 mg | 97,0% | 26,9 mg | 40,0% |
| TBTN | 27,0 mg | 95,0% | 24,7 mg | 47,0% |
| TBTL | 28,5 mg | 98,0% | 27,7 mg | 48,0% |
| TBT-TCD 1 | 27,5 mg | 98,0% | 26,0 mg | 75,0% |
| TBT-TCD 2 | 28,3 mg | 98,5% | 27,0 mg | 76,0% |
| TBT-TCD 3 | 29,0 mg | 98,0% | 26,5 mg | 78,0% |

Danach zerkleinert man die Holzklötzchen und extrahiert sie 24 h mit Äthanol/HCl-Lösung (0,3% HCl).

In den Extrakten werden sowohl Gesamtzinn als auch Tributylzinngehalt bestimmt.

Während die Tributylzinnverbindungen TBTO, TBTN und TBTL infolge der Belastung durch den Dauerversuch eine Abnahme der Tributylzinngehalte bis auf 40–48% aufweisen, ist die Abnahme bei den erfindungsgemässen TBT-TCD-Verbindungen wesentlich geringer. Es sind nach dem Lagertest noch über 75% Tributylzinnverbindung erhalten geblieben.

Biozide Wirkung

Die erfindungsgemässen TBT-TCD-Verbindungen zeigen eine hohe biozide Wirksamkeit gegen zahlreiche Bakterien und Pilze (Tabelle 2).

Zur Bestimmung der bioziden Wirkung (Tabelle 2) werden Papierrundfilter mit einem Durchmesser von 5,5 cm in abgestuften Konzentrationen der Tributylzinnverbindung in Äthanol getränkt und nach dem Trocknen im Agar-Auflegetest gegen Pilze und Bakterien getestet. Als Mass für die biozide Wirkung dient die Grösse der Hemmzonen um die Proben (Breite der bewuchsfreien Zone in mm).

Tabelle 2
Biozide Wirkung der Tributylzinnverbindungen (Agar-Auflegetest)
(Hemmzonen um die Proben in mm)

| Wirkstoff | Gew.-% in Tränklösg.* | Bacillus subtilis | Bacillus mesent. | Proteus vulgaris | Poria mont. | Cladosp. herbarum | Aureobas. pullulans | Trichoderma viride |
|---|---|---|---|---|---|---|---|---|
| TBTO | 0,5 | 2–3 | 3–4 | 0–1 | 5–7 | 3–4 | 1–2 | 0–1 |
| | 1,0 | 5–2 | 5–6 | 2–3 | 8–10 | 6–8 | 3–4 | 2–3 |
| | 3,0 | 10–12 | 10–12 | 4–5 | 12–15 | 8–10 | 5–6 | 4–6 |
| TBTN | 1,0 | 1–2 | 2–3 | 0 | 3–4 | 1–2 | 0–1 | 0 |
| | 2,0 | 3–4 | 3–4 | 1–2 | 5–7 | 4–5 | 1–2 | 2–3 |
| | 3,0 | 5–7 | 8–10 | 2–3 | 8–10 | 6–8 | 2–3 | 2–3 |
| TBT-TCD 1 | 0,75 | 1–2 | 2–3 | 0–1 | 2–4 | 2–3 | 0 | 0–1 |
| | 1,5 | 3–4 | 3–4 | 1–2 | 4–6 | 3–4 | 0–2 | 1–2 |
| | 2,25 | 6–8 | 6–7 | 3–4 | 7–8 | 5–7 | 2–3 | 3–4 |
| TBT-TCD 2 | 0,75 | 2–3 | 2–3 | 0–1 | 3–4 | 2–3 | 0–1 | 1–2 |
| | 1,5 | 4–5 | 4–5 | 1–2 | 5–7 | 3–4 | 1–2 | 2–3 |
| | 2,25 | 7–8 | 6–8 | 2–3 | 8–9 | 5–6 | 2–3 | 3–4 |
| TBT-TCD 3 | 0,75 | 2–3 | 2–3 | 0–1 | 4–5 | 2–3 | 0–1 | 0–1 |
| | 1,5 | 5–6 | 4–5 | 1–2 | 6–8 | 4–6 | 1–2 | 1–2 |
| | 2,25 | 8–10 | 8–10 | 3–4 | 8–10 | 6–8 | 3–4 | 3–4 |
| ohne | – | 0 | 0 | 0 | 0 | 0 | 0 | 0 |

* Konzentrationen entsprechend den TBT-Gehalten

**Patentansprüche**

1. Tri-n-butylzinnderivate von Tricyclodecan-Alkoholen der allgemeinen Formeln

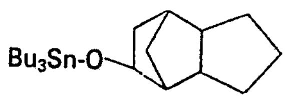

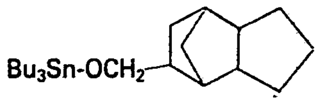

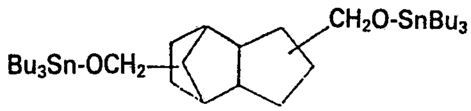

(Bu = n-Butyl)

2. 8-Tri-n-butylstannyl-oxy-tricyclo-[5,2,1,$0^{2,6}$]decan.

3. 8-Tri-n-butylstannyl-oxymethyl-tricyclo-[5,2,1,$0^{2,6}$]decan.

4. 3(4),8(9)-Bis(tri-n-butylstannyl-oxymethyl)-tricyclo[5,2,1,$0^{2,6}$]decan.

5. Verfahren zur Herstellung von Tributylzinnderivaten von Tricyclodecanalkoholen, dadurch gekennzeichnet, dass man die entsprechenden TCD-Alkohole mit Bis-(tri-n-butylzinn)-oxid oder Tri-n-butylzinnhalogeniden umsetzt.

6. Biozides Mittel, dadurch gekennzeichnet, dass es als aktiven Wirkstoff eine oder mehrere Verbindungen gemäss den Ansprüchen 1 bis 4 enthält.

7. Verwendung von Verbindungen gemäss den Ansprüchen 1 bis 4 zur Bekämpfung von Bakterien, Pilzen, Algen und Unterwasserbewuchsorganismen.

8. Verwendung von Verbindungen gemäss den Ansprüchen 1 bis 4 im Holzschutz zur Bekämpfung von holzschädigenden Mikroorganismen.

**Claims**

1. Tri-n-butyltin derivatives of tricyclodecane alcohols of the general formulae

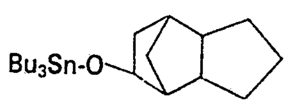

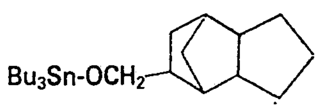

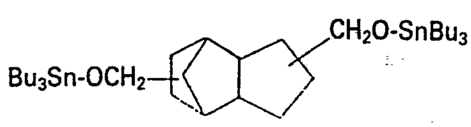

(Bu = n-Butyl)

2. 8-Tri-n-butylstannyloxy-tricyclo-[5,2,1,$0^{2,6}$]decane.

3. 8-Tri-n-butylstannyloxymethyl-tricyclo-[5,2,1,$0^{2,6}$]decane.

4. 3(4),8(9)-Bis(tri-n-butylstannyloxymethyl)-tricyclo[5,2,1,$0^{2,6}$]decane.

5. Process for the manufacture of tributyltin-derivatives of tricyclodecane alcohols, characterised in that the corresponding TCD alcohols are reacted with bis-(tri-n-butyltin) oxide or tri-n-butyltin halides.

6. Biocidal agent, characterised in that it contains as active ingredient one or more compounds according to claims 1 to 4.

7. Use of compounds according to claims 1 to 4 for the control of bacteria, fungi, algae and marine growth organisms.

8. Use of compounds according to claims 1 to 4 in wood preservation for controlling wood-damaging microorganisms.

**Revendications**

1. Dérivés tri-n-butylstanniques d'alcools tricyclodécyliques de formules générales

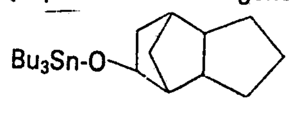

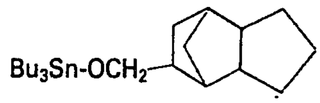

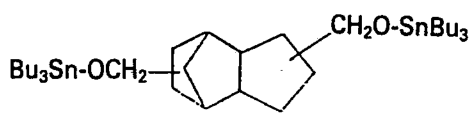

(Bu = n-Butyl)

2. (Tri-n-butylstannyloxy)-8-tricyclo-[5,2,1,$0^{2,6}$]décane.

3. (Tri-n-butylstannyloxy-méthyl)-8-tricyclo-[5,2,1,$0^{2,6}$]décane.

4. Bis-(tri-n-butylstannyloxy-méthyl)-3(4),8(9)-tricyclo[5,2,1,$0^{2,6}$]décane.

5. Prodédé pour préparer des dérivés tributylstanniques d'alcools tricyclocécyliques, procédé caractérisé en ce qu'on fait réagir les alcools TCD correspondants avec l'oxyde des bis-(tri-n-butylétain) ou avec des halogénures de tri-n-butylétains.

6. Produit biocide, caractérisé en ce qu'il contient, comme matière active, un ou plusieurs composés selon l'une quelconque des revendications 1 à 4.

7. Application de composés selon l'une quelconque des revendications 1 à 4 à la lutte contre des bactéries, des mycètes, des algues et des organismes qui provoquent la salissure d'objets immergés.

8. Application de composés selon l'une quelconque des revendications 1 à 4 dans la protection du bois pour combattre des micro-organismes déprédateurs du bois.